# EUROPEAN PATENT APPLICATION

(11) **EP 3 489 838 A1**
(43) Date of publication of application: **29.05.2019**
(21) Application number: 18208390.7
(22) Date of filing: 26.11.2018
(51) Int. Cl.: G06F 16/35

(54) **METHOD AND APPARATUS FOR DETERMINING AN ASSOCIATION**

(30) Priority: 24.11.2017 GB 201719587
(71) Applicant: Sage Global Services Limited, Newcastle upon Tyne, Tyne and Wear NE13 9AA (GB)
(72) Inventor: HASSAN, Bashar Awwad Shiekh, Newcastle Upon Tyne, Tyne and Wear NE16 4PQ (GB)
(74) Representative: HGF Limited

(57) **Abstract**

Embodiments of the present invention provide a system (120) for determining an association of a received data object (200) with one of a plurality of user-defined categories, comprising a computer-implemented communication module for receiving a data object (200) associated with the user, wherein the data object (200) comprises a plurality of attribute fields, a computer-implemented general model (320) comprising a neural network trained in dependence on an association of data objects with categories for a first plurality of users, a computer-implemented user model (330) wherein the user model (330) comprises an adaptive linear classifier trained in dependence on data objects associated with the user and respective categories, a computer-implemented neighbour module (340) arranged to obtain from each of a plurality of user models a probability value indicative of the data object (200) being associated with at least one category, and a computer-implemented reconciliation module (350).

## Description

### Background

It is often desired to associate received data relating to an entity or event with one of a plurality of categories associated with a user. Such association enables the data to be appropriately stored in a data store such as a memory, and also to be efficiently searched. However, it may be technically difficult to automatically associate the received data with the one of the plurality of categories associated with the user correctly.

For example, a plurality of predetermined categories may be provided. The user may be able adapt or customise the plurality of categories, for example to remove categories from the predetermined categories and to add additional categories as desired by the user. In this way, each individual user may be associated with a different plurality of categories which makes automatically associating the received data with one of the plurality of categories for every individual user difficult. Furthermore, some users may not have sufficient data associated with at least some of the categories from which aspects of the association may be reliably learned. Therefore, due to the variations in the plurality of categories and differing amounts of data, it is technically difficult to reliably determine the association automatically for each user.

Categorised data may be communicated to a user computer. The user computer may have limited resources such as memory capacity and display screen area. Therefore if data is incorrectly categorised, resources may be consumed unnecessarily by storing unnecessary data or utilising display screen area to display incorrect data.

It is an object of embodiments of the invention to at least mitigate one or more of the problems of the prior art.

### Statements of Invention

According to aspects of the present invention, there is provided apparatus and methods as set forth in the appended claims.

According to an aspect of the present invention, there is provided a system for determining an association of a received data object, comprising a computer-implemented receiver module for receiving a data object associated with a user, wherein the data object comprises a plurality of attribute fields, a computer-implemented general model for determining a probability value indicative of the data object being associated with each of a plurality of categories in dependence on at least some of the attribute fields, wherein the general model comprises a neural network trained in dependence on an association of data objects with categories for a first plurality of users, a computer-implemented user model associated with the user for determining a probability value indicative of the data object being associated with each of a plurality of user categories associated with the user in dependence on at least some of the attribute fields, wherein the user model comprises an adaptive linear classifier trained in dependence on data objects associated with the user and respective categories, a computer-implemented neighbour module arranged to obtain from a plurality of user models a probability value indicative of the data object being associated with at least one category, wherein each of the plurality of user models is associated with a respective neighbour having a determined similarity to the user and each user model is arranged to determine the probability value in dependence on at least some of the attribute fields and a computer-implemented reconciliation module arranged to receive at least some of the probabilities determined by the general model, the user model and the neighbour module and to select one of the categories as being associated with the data object in dependence thereon.

According to another aspect of the present invention, there is provided a system for determining an association of a received data object with one of a plurality of user-defined categories, comprising a computer-implemented communication module for receiving a data object associated with a user, wherein the data object comprises a plurality of attribute fields, a computer-implemented general model for determining a probability value indicative of the data object being associated with each of the plurality of categories in dependence on at least some of the attribute fields, wherein the general model comprises a neural network trained in dependence on an association of data objects with categories for a first plurality of users a computer-implemented user model associated with the user for determining a probability value indicative of the data object being associated with each of a plurality of user categories associated with the user in dependence on at least some of the attribute fields, wherein the user model comprises an adaptive linear classifier trained in dependence on data objects associated with the user and respective categories, a computer-implemented neighbour module arranged to obtain from a plurality of user models a probability value indicative of the data object being associated with at least one category, wherein each of the plurality of user models is associated with a respective neighbour having a determined similarity to the user and each user model is arranged to determine the probability value in dependence on at least some of the attribute fields and a computer-implemented reconciliation module arranged to receive at least some of the probabilities determined by the general model, the user model and the neighbour module, to select one of the categories as being associated with the data object in dependence thereon and to store in a memory the data object comprising an indication of the determined category, a computer implemented retrieval module arranged to retrieve from the memory one or more data objects according to the indication of the category associated therewith.

The communication module is optionally arranged to send the retrieved one or more data objects to a user computer. The user computer may display on a display device associated therewith an indication of the category.

The data object may be of indicative of an entity or an event.

The receiver module is optionally arranged to determine a vector corresponding to at least some of the attribute of the data object; optionally the vector is determined based on a predetermined algorithm.

The receiver module may be arranged to determine first and second vectors corresponding to first and second attribute fields of the data object.

The receiver module may be arranged to determine a vector corresponding to a combination of first and second attribute fields of the data object.

The neural network of the general model optionally comprises a perceptron having a plurality of layers arranged in a diamond configuration according to a number of neurons in each layer.

The general model may be arranged to output the probability value indicative of the data object being associated with each of a predetermined number of categories.

The predetermined number is optionally between 1 and 10.

Optionally an output of the general model is provided to the user model for determining the probability value indicative of the data object being associated with each of a plurality of user categories associated with the user in dependence thereon.

The user model may be arranged to output a probability value indicative of the data object being associated with each category associated with the user.

The plurality of user models from which the neighbour module is arranged to obtain probability values may each comprise an adaptive linear classifier trained in dependence on data objects associated with the respective neighbour.

The neighbour module may be arranged to obtain from each of the plurality of user models one probability value indicative of the data object being associated with a category of the respective neighbour.

The reconciliation module is optionally arranged to compare the one or more probabilities determined by the general model and the user model. The reconciliation module may be arranged to select one of the categories determined by the user model as being associated with the data object when said category is associated with a greater probability than a category determined by the general model.

When said category determined by the general model is associated with a greater probability than the category determined by the user model, the reconciliation module is optionally arranged is to compare the probabilities determined by the general model and the neighbour module and to select one of the categories having a greatest probability.

The reconciliation module may be arranged to perform a textual similarity comparison between the one of the categories determined by the general model, the user model and the neighbour module and to reconcile two or more categories having greater than a predetermined degree of textual similarity.

The textual similarity may be determined by a Cosine similarity.

The reconciliation module may be arranged to associate the data object with the selected category.

The reconciliation module may be arranged to store the data object in a memory with a data attribute field indicative of the determined category.

The adaptive linear classifier is optionally a passive-aggressive classifier.

The data object may be received from one of a client computer, a user interface or a data processing system.

According to an aspect of the present invention, there is provided a computer-implemented method of determining an association of a received data object, comprising receiving a data object associated with a user, wherein the data object comprises a plurality of attribute fields, determining a probability value indicative of the data object being associated with each of a plurality of categories in dependence on at least some of the attribute fields, wherein said determining is performed by a general model comprising a neural network trained in dependence on an association of data objects with categories for a first plurality of users, determining a probability value indicative of the data object being associated with each of a plurality of user categories associated with the user in dependence on at least some of the attribute fields, wherein said determining is performed by a user model comprising a passive-aggressive classifier trained in dependence on data objects associated with the user and respective categories, determining, by a plurality of user models each associated with a respective neighbour, a probability value indicative of the data object being associated with at least one category, wherein each of the plurality neighbours is selected to have a determined similarity to the user and each user model is arranged to determine the probability value in dependence on at least some of the attribute fields and selecting one of the categories as being associated with the data object in dependence on at least some of the probabilities determined by the general model, the user model and the neighbour module. The method may comprise storing the data object associated with an indication of the determined category and retrieving from the memory one or more data objects according to the indication of the category associated therewith.

The receiver module may be arranged to determine a vector corresponding to at least some of the attribute fields of the data object; optionally the vector is determined based on a predetermined algorithm.

The method may comprise determining first and second vectors corresponding to first and second attribute fields of the data object.

The method may comprise determining a vector corresponding to a combination of first and second attribute fields of the data object.

The neural network of the general model may comprise a perceptron having a plurality of layers arranged in a diamond configuration according to a number of neurons in each layer.

The general model may be arranged to output the probability value indicative of the data object being associated with each of a predetermined number of categories.

The predetermined number is optionally between 1 and 10.

An output of the general model may be provided to the user model for determining the probability value indicative of the data object being associated with each of a plurality of user categories associated with the user in dependence thereon.

The user model may be arranged to output a probability value indicative of the data object being associated with each category associated with the user.

The plurality of user models from which the neighbour module is arranged to obtain probability values may each comprise an adaptive linear classifier trained in dependence on data objects associated with the respective neighbour.

The neighbour module may be arranged to obtain from each of the plurality of user models one probability value indicative of the data object being associated with a category of the respective neighbour.

The reconciliation module may be arranged to compare the one or more probabilities determined by the general model and the user model, and to select one of the categories determined by the user model as being associated with the data object when said category is associated with a greater probability than a category determined by the general model.

When said category determined by the general model is associated with a greater probability than the category determined by the user model, the reconciliation module is optionally arranged to compare the probabilities determined by the general model and the neighbour module and to select one of the categories having a greatest probability.

The reconciliation module may be arranged to perform a textual similarity comparison between the one of the categories determined by the general model, the user model and the neighbour module and to reconcile two or more categories having greater than a predetermined degree of textual similarity.

The textual similarity may be determined by a Cosine similarity.

The reconciliation module may be arranged to associate the data object with the selected category.

The reconciliation module may be arranged to store the data object in a memory with a data attribute field indicative of the determined category.

According to another aspect of the present invention, there is provided a computer comprising the system as described above or arranged to perform the method described above.

The computer may comprise one or more processing devices arranged to, in use, execute computer readable instructions to implement a categorisation application. The categorisation application may be arranged to communicate with a further computer via a computer network, wherein said categorisation application is arranged to provide the data object to the system and to receive an indication of the category determined in dependence thereon.

According to a still further aspect of the present invention, there is provided a system comprising a first computer as described above, a processing system in communication with the first computer, the processing system comprising a computer program product comprising instructions to receive the data object and the indication of the category and to process the data object and the indication of the category.

According to a still further aspect of the present invention, there is provided a data processing system or computer program product for use in the system described above.

According to a still further aspect of the present invention, there is provided a computer system, comprising a first computer as described above and a second computer communicably coupled to the first computer, wherein the second computer is arranged to, in use, execute computer readable instructions to implement an application to provide data to the categorisation application to form the data object and to receive the indication of the category associated with the data object from the first computer.

The application may provide a user interface to receive data from a user, wherein the data provided to the categorisation application to form the data object corresponds to data received from the user.

The first computer may be a server computer and the second computer is one of a portable computing device or a desktop computer.

According to another aspect of the present invention, there is provided computer software which, when executed by a computer, is arranged to perform a method as described above.

The computer software may be stored on a computer-readable medium.

### Brief Description of the Drawings

Embodiments of the invention will now be described by way of example only, with reference to the accompanying figures, in which:
Figure 1 shows a system according to an embodiment of the invention;
Figure 2 shows a schematic illustration of a data object according to an embodiment of the invention;
Figure 3 shows an illustration of a system according to an embodiment of the invention;
Figure 4 shows an illustration of a plurality of users and respective sets of accounts;
Figure 5 illustrates a method according to an embodiment of the invention;
Figure 6 shows a schematic illustration of an associated data object according to an embodiment of the invention;
Figure 7 illustrates processing performed according to embodiments of the invention; and
Figure 8 illustrates components of a computer according to an embodiment of the invention.

### Detailed Description of Embodiments of the Invention

Embodiments of the present invention are provided for determining an association of a data object having a plurality of attribute fields with one of a plurality of categories, types or tags associated with one or more of a plurality of entities, such as users of a computer system. In some embodiments, the data object is related to a physical entity or event and comprises data indicative of attributes of the physical entity or event. For example, measurements or observations of the physical entity may be made and comprised or stored in the data object. More specifically, measurements or observations may be made about events or entities such as passing vehicles, articles produced from a production process, or sound recordings. The measurements may relate to the dimensions e.g. size, speed, appearance e.g. colour of the articles. It may be desired for these observations to be categorised differently for each user, as will be explained.

Each user may have a different set of associated categories and different number of prior associated data objects from which information about associations may be derived. Furthermore, at least some users may lack sufficient data associated with at least some categories from which an association may be derived. Embodiments of the present invention aim to address these technical problems by use of a plurality of models and modules, as will be explained.

A first model, namely a general model, may provide an indication of an association based on a first plurality of users, which may be all users of the computer system. A second model, namely a user model, may provide an indication of an association based on the specific user's data. Further indications of associations may be provided from user models, via a neighbour module, associated with other users of the computer system which are determined to have a similarity to the specific user. In this way, the problems with variability in the categories associated with the user and limited available data may be ameliorated. Embodiments of the present invention address the above mentioned technical problems and may provide more accurate and more reliable association of the data object with one of the categories, which may reduce usage of computer resources handling incorrect association.

Embodiments of the present invention provide a system for determining an association of a received data object which comprises a computer-implemented receiver module for receiving a data object associated with a user from a client device, wherein the data object comprises a plurality of attribute fields, a computer-implemented general model for determining a probability value indicative of the data object being associated with each of a plurality of categories in dependence on at least some of the attribute fields, wherein the general model comprises a neural network trained in dependence on an association of data objects with categories for a first plurality of users, a computer-implemented user model associated with the user for determining a probability value indicative of the data object being associated with each of a plurality of user categories associated with the user in dependence on at least some of the attribute fields, wherein the user model comprises an adaptive linear classifier trained in dependence on data objects associated with the user and respective categories, a computer-implemented neighbour module arranged to obtain from a plurality of user models a probability value indicative of the data object being associated with at least one category, wherein each of the plurality of user models is associated with a respective neighbour having a determined similarity to the user and each user model is arranged to determine the probability value in dependence on at least some of the attribute fields, and a computer-implemented reconciliation module arranged to receive at least some of the probabilities determined by the general model, the user model and the neighbour module and to select one of the categories as being associated with the data object in dependence thereon. The data object may be indicative of an entity or event and one or more attributes of the data object indicative of features of said object or event.

In one example, it is desired to keep records of transactions as an example form of event having a plurality of associated attributes. It will be appreciated from the above, however, that embodiments of the invention are not limited in this respect and the data object may represent a physical object or event storing respective attributes thereof. It is known to provide online systems for keeping records of transactions. To support such transaction recording, a transaction recording system may support a plurality of records or accounts, as an example of a plurality of categories, stored at a computing system for each of a plurality of users. Each transaction is associated at the computing system with one of the user's accounts. The association between the transaction and the one of the plurality of accounts may be made manually by the user. Such manual association is time consuming for the user, especially where large numbers of transactions are concerned. It would be desirable to automatically associate each transaction with one of the user's accounts. However it is difficult to automatically determine the association due to variances between the accounts of each user which make providing an association algorithm difficult thereby consuming increased computing resources and potentially being inaccurate.

A standard set of categories or accounts may be provided, or offered, by the computing system to each user. Each account may have a textual description identifying to the user the information about that account. A user may wish to customise their set of accounts such as by adding additional accounts or removing accounts from the standard set of accounts. For example, a textual description for an account in the standard set of accounts may be modified to be a sub-account and further sub-accounts added which are relevant to the particular user. Thus, each user may be associated with more or less accounts than the standard set of accounts and the accounts may have different textual descriptions. In this way automatically associating transactions with accounts becomes problematic and may require increased computing resources. Furthermore, incorrect association reduces an efficiency of retrieving transactions from memory of the computing system.

Whilst embodiments of the invention may be described with reference to data objects representing transactions and categories representing accounts, it will be understood that this is merely an example and that embodiments of the invention are not limited in this way.

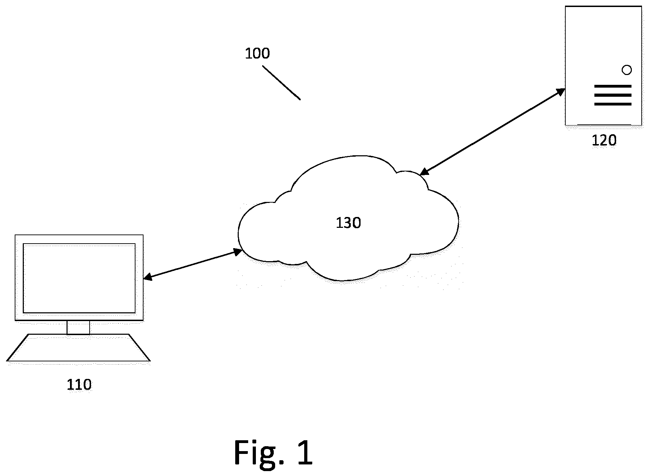

Figure 1 illustrates a system 100 according to an embodiment of the invention. The system 100 comprises a first computer in the form of a user computer 110 and a second computer in the form of a server computer 120. Each of the user computer 110 and server computer 120 may comprise one or more processors arranged to operably execute computer software thereon, where the computer software is stored in a computer-readable medium accessible to the one or more processors. The computer-readable medium may be one or more memory devices, where the memory may also store data for use by the software.

The user computer 110 and server computer 120 are communicably coupled by a computer network 130. The computer network 130 may comprise one or more networks such as Local Area Networks (LANs) and the Internet. The server computer 120 may provide a service to the user computer 110 via the network 130. The service may be provided via one or more web pages where the user computer 110 operably executes software for interpreting web pages, such as a web browser, where the web pages may include mark-up language such as HTML. However, in other embodiments the user computer 110 may execute a software application which is arranged to communicate with counterpart software executing on the server computer 120. The software application may provide a graphical user interface for a user of the user computer 110.

In use, the user computer 110 is operated in some embodiments by a user to receive data from the user, via the user interface and to communicate data to the server computer 120 in the form of a data object. The data may be indicative of a transaction i.e. transaction data, such that the server computer 120 stores a record of the transaction. The data object representing the transaction is communicated from the user computer 110 to the server computer 120 via the computer network 130. In some embodiments, the user computer 110 is a payment processing system for processing payments i.e. authorising a payment associated with the user.

The user computer 110 is, at least temporarily, associated with one of a plurality of users of the server computer 120. Each of the users has an account at the server computer 120 and is authenticated to the server computer 120 via the user computer 110 such as by supplying appropriate logon credentials which are communicated from the user computer 110 to the server computer 120. The user computer 110 may be associated with the user through the user providing logon credentials. The user computer 110 may be associated with the user by processing a payment associated with the user.

At the server computer 120, in a data storage device of the server computer 120, hereinafter a memory of the server computer 120, account data is stored for each of the plurality of users. The server computer 120 retrieves the account data for the respective user in dependence on the received logon credentials. The account data is indicative of the set of accounts associated with the respective user. The set of accounts may correspond to a default set of accounts provided by the server computer 120. However the account data may be modified account data which has been customised by the user i.e. to delete or add accounts from or to the default set of accounts or to rename one or more accounts of the default set of accounts. Thus the account data identifies each of a plurality of accounts, representing categories, associated with the respective user which may correspond to the default set of accounts or be a unique set of accounts for that user. The plurality of accounts associated with the respective user is hereinafter referred to as the user's accounts.

Each of the user's accounts may already be associated with one or more transactions. By associated it is meant that, in some embodiments, transaction data indicative of a transaction which is stored in the memory of the server computer 120 comprises an identifier of one of the user's accounts. For relatively new users there may be relatively few transactions, or even no transactions, associated with at least some of the user's accounts. The fact that users of the server computer 120 may modify the account data and that at least some of the user's accounts may have relatively few associated transactions may make association of new transactions with one of the user's accounts difficult or computationally expensive. Furthermore, in some situations, determining the association may be impossible, or at least nearly, due to an absence of data.

In some embodiments, the server computer 120 may also be communicatively coupled to a data processing system. The data processing system comprises a computer program product comprising instructions which when executed by the data processing system receive a data object from the server computer 120 and an indication of a category determined to be associated with the data object by the server computer 120. The data processing system is arranged to process the data object and the indication of the category.

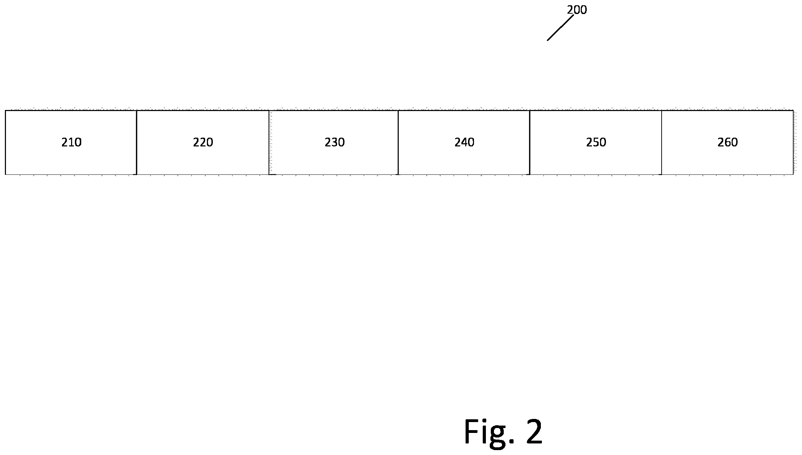

Figure 2 is a schematic illustration of a data object in the form of a transaction data object 200 which may be communicated from the user computer 110 to the server computer 120. The data object comprises a plurality of attribute fields 210-260.

Some of the attribute fields 210-260 may be numeric and some of the attribute fields may be alphanumeric. The attribute fields 210-260 may be indicative of one or more of a date 210 associated with the transaction, a value 220 of the transaction i.e. such as total amount of the transaction, a tax amount 230 associated with the transaction, a supplier 240 associated with the transaction, a description 250 associated with the transaction and an account 260 with which the transaction is associated. Attributes fields 210-250 may be provided by a computer from which the transaction data object 200 is transmitted. The account 260 field may be completed or added to the transaction data object 200 at the server i.e. once a determination of an account with which the transaction data object 200 is associated is made. It will be appreciated that embodiments of the invention are not limited to transaction data objects as illustrated in Figure 2 and that other attribute fields may be used or added.

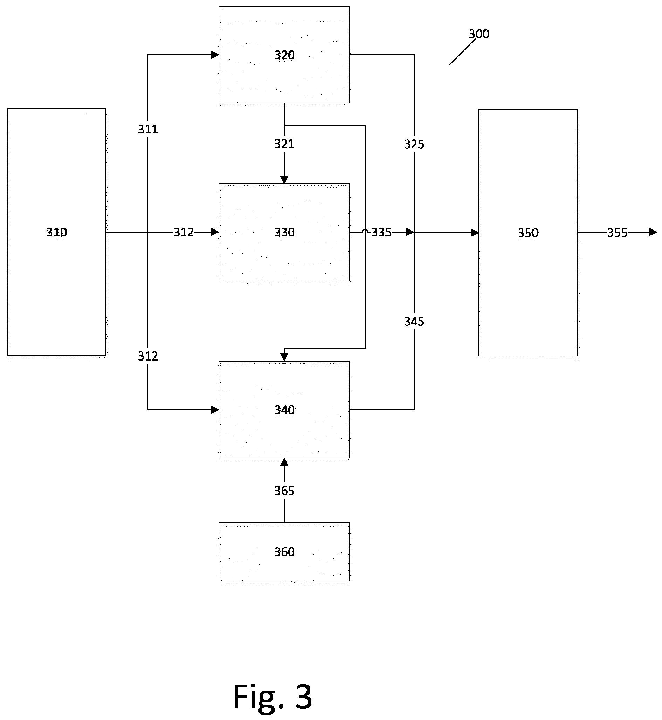

Figure 3 illustrates a system 300 according to an embodiment of the invention. The system 300 comprises a transaction pre-processing module (TPM) 310, a general model (GM) 320, a user model (UM) 330, a neighbour module (NM) 340 and a reconciliation module (RM) 350. In some embodiments, the system 300 comprises a neighbour selection module (NSM) 360.

The system 300 may reside on the server computer 120. In particular the system 300 may be implemented as a plurality of modules which operatively execute one or more processors of the server computer 120. It will be appreciated that the one or more processors do not necessarily need to be formed as part of the same physical server computer 120 and that the processors may form a virtual machine implementing the system 300 i.e. as a cloud computer.

The TPM 310 is arranged to receive the transaction data object (TDO) 200. The TPM 310 may receive the data object via a computer network from another computer or apparatus for generating the data object. The TPM 310 performs one or more processing operations on the TDO 200 to allow the GM 320, UM 330, NM 340 to determine an account with which the TDO 200 is associated. In some embodiments, the TPM 310 performs a respective set of processing operations on the TDO 200 for each of the GM 320, UM 330, NM 340 as will be explained.

The TPM 310 is arranged to determine one or more vectors each indicative of an alphanumeric attribute field of the TDO 200. In some embodiments, the TPM 310 may determine a first vector indicative of a first attribute field, such as the supplier 240 attribute field, and a second vector indicative of a second attribute field, such as the description 250 attribute field. Each of the vectors may have predetermined dimensions, such as a length of between 200 and 400 values. In some embodiments, each vector has a length of 300 values, although other values may be used.

Determination of a vector corresponding to each attribute field may be performed by an algorithm such as the Global Vectors for Word Representation (GloVe) as developed by Jeffrey Pennington, Richard Socher and Christopher Manning at Stanford University. It will be appreciated that other algorithms may be used.

In some embodiments, the TPM 310 provides a first output 311 indicative of the TDO 200 to the GM 320 and a second output 312 indicative of the TDO 200 to the UM 330. The NM 340 is arranged to also receive the second output 312 from the TPM 310.

The first output 311 may comprise the first vector and the second vector discussed above. In some embodiments, the first output may further comprise one or more of the numeric attribute fields of the TDO 200 such as the date 210, value 220 and tax amount 230 attribute fields.

The second output 312 may comprise one vector, a third vector, indicative of a plurality of alphanumeric attribute fields, such as both the supplier and description 240, 250 attribute fields. In order to determine the third vector the supplier and description 240, 250 alphanumeric fields may be combined, such as appended together and the third vector determined based on the combined attribute fields. The third vector may have the same dimensions as the first and second vectors which may be 300 values in length in some embodiments. The second output may further comprise one or more of the numeric attribute fields of the TDO 200 such as the date 210, value 220 and tax amount 230 attribute fields. Advantageously combining the plurality of attribute fields for the customer model allows determination of the association where the UM 330 is only associated with relatively small amounts of data. That is, when the UM 330 is only associated with small amounts of data, training with large attribute fields may not be possible, or may be difficult. By combining the one or more attribute fields better training data may be provided for the UM 330.

### General Model 320

The GM 320 is arranged to determine an association of the TDO 200 with one of the user's accounts. The GM 320 may receive the first output 311 from the TPM 310 and output 325 an indication of one or more of the user's accounts with which the TDO 200 is likely to be associated. In some embodiments, the GM 320 may output an indication of one or a plurality of the user's accounts and an indication of a probability of the TDO 200 being associated with each of those accounts. In some embodiments, the GM 320 is arranged to output an indication of a predetermined number of the user's accounts and the indication of a probability of the TDO 200 being associated with each of those accounts. The predetermined number may be between 1 and 10, or between 2 and 5. In some embodiments, the GM 320 is arranged to output an indication of three accounts. The predetermined number may be those accounts having the greatest probability.

The GM 320 may only output an indication of the TDO 200 being associated with one of the default set of accounts provided by the server computer 120 in some embodiments. That is, if the user has an account which is additional to those in the default set of accounts the GM 320 may not determine an association between the TDO 200 and the additional account.

The GM 320 may comprise a classifier such as a neural network which is trained in dependence on an association of transactions with accounts for a first plurality of users where the first plurality of users may, in some embodiments, be all of the users of the server computer 120. The GM 320 may be trained in dependence on an association of transactions with accounts in the default set of accounts provided by the server computer 120. In some embodiments, the neural network may be a deep neural network, such as a convolutional network or perceptron comprising a plurality of layers i.e. a multi-layer perceptron, for example. In some embodiments, the network comprises 6 layers, although other numbers may be envisaged. The number of layers may be selected in dependence on a nature of the data concerned. Sufficient layers are required to represent the data. The plurality of layers may be arranged in a diamond configuration according to numbers of neurons in each layer i.e. with more neurons in middle layers, which may assist in determining the association. Thus the layers may comprise a first set of growth layers and a second set of layers for shrinkage. In the example embodiment 3 growth layers are used and 3 shrinkage layers, although other numbers in each set may be used. For example, the network may comprise 600-700-900-600-400-200 neurons per layer. In some embodiments, a sigmoid activation function may be used throughout the network. Advantageously a sigmoid activation function may be used as a best fit for continuous data. However, in other embodiments a tanh or rectified linear unit (ReLU) function may be used, for example. In order to avoid over-fitting of the network a predetermined dropout value may be used, for example having a value of 0.2. A linear or softmax function may be used in a final layer of the network of the GM 320 which aids in a determination of the association between the TDO 200 and the account.

A loss function may be used to determine a quality of training of the network, such as with cross entropy i.e. to measure a distance between an output of the network and an expected output. The training may be performed with 300 epochs i.e. cycles of processing all batches of input data. A batch size may be set to 100, although other batch sizes may be used. In some embodiments a stochastic gradient descent (SGD) function may be used. In particular, in some embodiments, an ADAM optimisation algorithm may be used. Advantageously the ADAM function may require less tuning compared to other functions.
The network of the GM 320 may work against the first input 311 provided from the TPM 310.

To create the GM 320, the network is trained based upon transactions associated with accounts in the default set of accounts. A predetermined number of transactions may be used as training data. In some embodiments, the GM 320 is trained with 2 million TDOs 200, although other numbers of TDOs may be used, such as 600K TDOs. When an accuracy of the GM 320 is tested used a validation set of transactions, tests have determined in average accuracy ∼ 94.5% on the validation set (where the validation say may be between ∼200k and ∼600K TDOs).

### User Model 330

The UM 330 is a classifier which is arranged to determine an association of the TDO 200 with one of the user's accounts. The UM 330 is arranged to receive the second output 312 from the TPM 310. Advantageously, the second output comprises one vector of values relating to the plurality of alpha numeric attribute fields of the TDO 200 allows the UM 330 to be trained on relatively small amounts of data as discussed above.

The UM 330 is arranged to output 335 an indication of one or more of the user's accounts with which the TDO 200 is likely to be associated. The indication may comprise an indication of one or more of the user's accounts and a probability of the TDO 200 being associated with each of those accounts.

In some embodiments, the UM 330 comprises an adaptive linear classifier, such as one utilising linear regression or linear discrimination analysis. In some embodiments, the classifier may be a passive-aggressive (PA) classifier. Advantageously the PA classifier may be selected due to its ability to quickly adapt. The classifier of the UM 330 is trained in dependence on an association of transactions existing in the user's accounts. That is, the UM 330 is configured individually for the respective user's accounts. Advantageously the use of a PA classifier for the UM 330 provides relatively fast classification of transactions with the user's accounts. Furthermore, the aggressive nature of the UM 330 means that in the event of an incorrect classification the classifier is updated based on the user's selection of another account than determined by the UM 330. The passive nature of the classifier means that no change is made then the UM 330 correctly determines the association of TDO 200 and account.

In some embodiments, an oversampling algorithm is used to avoid a bias of the classifier toward accounts which are associated with more transactions in the training data. The oversampling algorithm may be a Synthetic Minority Over-sampling Technique (SMOTE), although other algorithms may be used, such as probabilistic sampling, Monte Carlo methods or Gibbs sampling. The SMOTE algorithm may be advantageously used due to its efficiency and due to its ability to work with small data sets.

In some embodiments, an output 321 is provided from the GM 320 to the UM 330. The output 321 may also be provided in some embodiments to the NM 340. The output 321 may comprise a vector of values each indicative of a probability of a respective one of the default set of accounts being associated with the TDO 200. For example, where there are 20 accounts in the default set of accounts, the vector comprises 20 probability values each indicative of the probability of the TDO 200 being associated with the respective account in the default set of accounts. The vector is provided as an input to the UM 330. The vector provided to the UM 330 advantageously assists the UM 330 determining an association of the TDO 200.

In testing, the UM 330 has been determined to have an accuracy of ∼90% when tested on 1800 users.

### Neighbour Module 340

As noted above, the system 300 comprises the NM 340. The NM 340 is arranged to determine an association of the TDO 200 with accounts of other users, as will be explained. The NM 320 may receive the second output 312 from the TPM 310. The NM may also receive the output 321 of the GM 320. The NM 340 is arranged to output an indication of a predetermined number of accounts of other users (i.e. not the user currently associated with the computer 110) with which the TDO 200 is likely to be associated.

As discussed above, the UM 330 is a classifier which is arranged to determine an association of the TDO 200 with one of the user's accounts. Thus, for each user of the server 120, a UM 330 exists which is trained in dependence on the association of transactions existing in the respective user's accounts i.e. the UM 330 is bespoke for the particular user. The NM 340 is arranged to utilise a predetermined number of UMs of other users to each provide an indication of at least one account of that user with which the TDO 200 is likely to be associated. In some embodiments, the NM 340 is arranged to utilise the UMs of between 5 and 15 other users. In one embodiment, the NM 340 is arranged to utilise the UMs of 10 other users. Each UM is provided with the input to the NM 340 and provides an indication of between 1 and 5 accounts with which the TDO 200 is likely to be associated. In one embodiment, each UM provides an indication of the one account of the respective other user with which the TDO 200 is most likely to be associated. Each UM may provide an indication of the other user's one or more accounts and an associated probability value for each account.

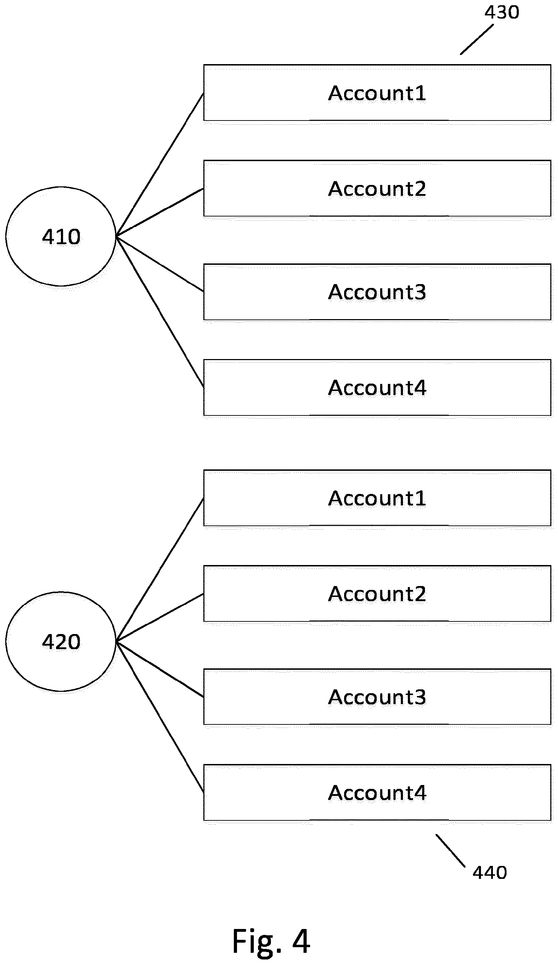

Referring to Figure 4, there is illustrated a representation of two users, namely a first user 410 and a second user 420 having accounts at the server computer 120. The first user 410 may be the user currently associated with the user computer 110. The second user 420 may be one of a plurality of other users associated with the server computer 120. Each of the first and second users 410, 420 has an associated set of accounts identified in Figure 4 as a first set 430 and a second set 440, respectively. Each set 430, 440 of accounts comprises one, or as shown more normally a plurality of accounts. Illustrated in Figure 4 both sets 430, 440 comprise four accounts although this is merely illustrative and each set may comprise other numbers of accounts and need not comprise equal numbers of accounts.

Since the server computer 120 may be utilised by a large number of users, it is necessary in some instances to identify a subset of the users of the server computer 120 whose UMs are to be used by the NM 340. The subset of the users may be known as neighbours of the user of the client computer 110. The term neighbour is used since those users are determined to have similarity to the user of the user computer 110. The NSM 360 is arranged to determine those users of the server computer 120 corresponding to neighbours of the user computer 110 i.e. to select the neighbours from the users of the server computer 120. The NSM 360 may select up to M neighbours where M is an integer, such as 10.

In order to determine the users corresponding to neighbours of the user computer 110, the NSM 360 may employ a natural language processing (NLP) algorithm, such as Latent Dirichlet Allocation (LDA), which is advantageously efficient and works well with data from short sentences. The NLP may alternatively be topic modelling which may use a neural network. The NLP algorithm is used to model the set of accounts associated with each user. Further reference will be made to LDA as an example. The set of accounts may be considered as a document which is passed to the LDA. The LDA determined a probability distribution of topics in the document. The probability distribution of two users set of accounts will be similar given similar sets of accounts. Thus, the probability distribution is used as a basis to determine the similarity between users' sets of accounts. User of the server computer 120 can be ordered with respect to similarity to the user of the user computer 110. Based on the ordering, the most similar M users may be selected. These UMs of these M users, or neighbours, are used by the NM 340 to determine a likely association of the TDO 200 with each of those M neighbours' accounts. The NM 340 is useful where the UM 330 may not reliably operate though limited data in the user's own accounts.

In one embodiment, the NM 340 is arranged to output 345 an indication of M accounts associated with the TDO 200. The NM 340 may also output an indication of a probability of the TDO 200 being associated with each of those accounts.

### Reconciliation Module 350

The RM 350 is arranged to receive the output 325 from the GM 320, the output 335 from the UM 335 and the output 345 from the NM 340.

As discussed above, in one embodiment the RM 350 receives: (a) an indication 325 of a predetermined number, such as three accounts and associated probabilities from the GM 320, (b) an indication 335 of a predetermined number, such as three accounts and associated probabilities from the UM 330 and (c) an indication 345 of a predetermined number, such as ten accounts and associated probabilities from the NM 340. It will be appreciated that in other embodiments indications of other numbers of accounts may be received by the RM 350.

The RM 350 is arranged to reconcile the various indications to provide an output 355 indicative of one account with which the TDO 200 is associated.

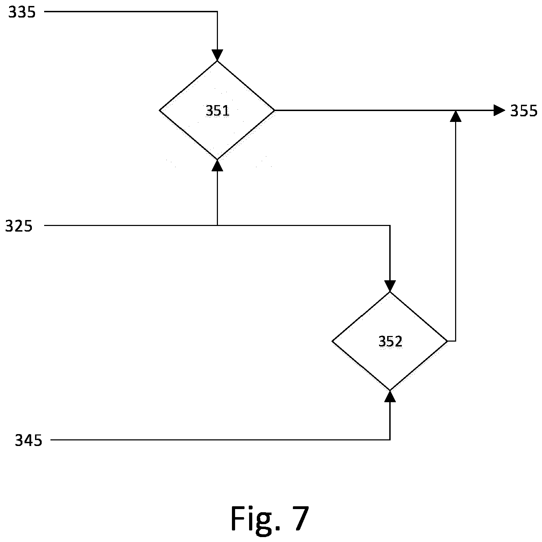

In one embodiment, the RM 350 is arranged to compare the probability values provided from the UM 330 against the probability values provided from the GM 320. In dependence on the comparison, the RM 350 is arranged to select an account indicated by one of the GM 320 and the UM 330. If the GM 320 and the UM 330 do not provide an indication of an account having a sufficient level of probability, the RM 350 is arranged to select an account indicated by the NM 340 in some embodiments. Further explanation of the processing performed by the RM 350, in some embodiments, is provided below in connection with Figure 7. The RM 350 may output an indication of an association of the TDO 220 and one of the accounts.

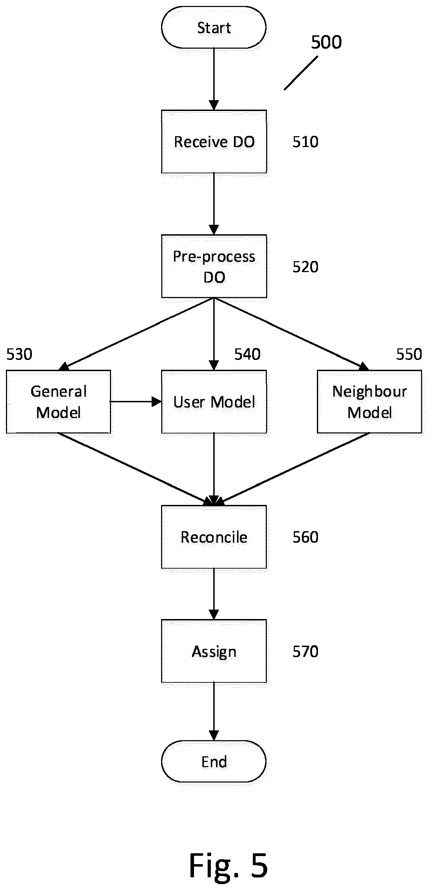

Figure 5 illustrates a method 500 according to an embodiment of the invention. The method may be performed by one or more electronic processing devices. The method may be represented by computer-executable instructions stored in a computer readable medium. The computer-executable instructions may be executed, such as by the server computer 120, to implement a method according to an embodiment of the invention such as illustrated in Figure 5.

The method 500 comprises a step of receiving a TDO 200. The TDO may be received at the server computer 120 via the network 130 from the user computer 110. A user of the user computer 110 may have caused the transmission of the TDO 200 from the user computer 110. In other embodiments, the TDO 200 may be received at the server computer 120 from a computer system for processing transactions, where the TDO 200 is associated with the user. As noted above, the TDO 200 may comprise a plurality of attribute fields 210-260 such as illustrated in Figure 2.

In step 520 the TDO 200 is pre-processed in order to facilitate classification by a plurality of models to determine the association between the TDO 200 and one of the user's accounts.

As noted above, the pre-processing in step 520 may comprise determining one or more vectors each indicative of one or more attribute fields 210-260 of the TDO 200. In some embodiments, the vector may be indicative of at least one alphanumeric attribute field of the TDO 200. In some embodiments, a first vector may be determined which is indicative of a first attribute field, such as the supplier 240 attribute field, and a second vector may be determined which is indicative of a second attribute field, such as the description 250 attribute field. In some embodiments, a vector is determined which is indicative of a plurality of combined attribute fields 210-260. The one or more vectors may be provided as an output of step 520 along with data from one or more of the remaining attribute fields 210-260 of the TDO 200.

Step 530 comprises determining an association of the TDO 200 with one of the user's accounts. Step 530 is performed by the GM 320 as described above. Step 530 may comprise receiving the one or more vectors and data from one or more of the remaining attribute fields 210-260 of the TDO 200 as described above.

Step 530 may comprise determining an indication of one or a plurality of the user's accounts and an indication of the probability of the TDO 200 being associated with each of those accounts. Step 530 may comprise determining an indication of a predetermined number of the user's accounts and the indication of a probability of the TDO 200 being associated with each of those accounts. Step 530 may comprise of determining the association of the TDO 300 with one of the default set of accounts provided by the server computer 120.

Step 540 may comprise determining an association of the TDO 200 with one of the user's accounts. Step 540 may be performed by the UM 330, as described above. Step 540 may comprise receiving an output of step 530 indicative of one or a plurality of the user's accounts and an indication of the probability of the TDO 200 being associated with each of those accounts. An indication of the one or more of the user's accounts and the probability of each association is output from step 540.

Step 550 may comprise determining a probability value indicative of the TDO 200 being associated with an account of at least one of the user's neighbours. Each of the plurality of neighbours is selected to have a determined similarity to the user. The UM 330 associated with each selected neighbour is arranged to determine the probability of the TDO 200 being associated with one of their accounts. An indication of the account of each neighbour is output from step 550.

In step 560 the indications provided from steps 530, 540 and 550 are reconciled. Said reconciliation in step 560 comprises selecting one of the indicated accounts as being associated with the TDO 200 in dependence on at least some of the probabilities provided from steps 530, 540 and 550.

Step 560 may comprise processing the inputs provided from the GM 320, UM 330 and NM 340. An embodiment of said processing is illustrated in Figure 7.
As noted above, the RM 350 is arranged to receive an indication 325 of a predetermined number, such as three, accounts and associated probabilities from the GM 320 and an indication 335 of a predetermined number, such as three accounts, and associated probabilities from the UM 330. The RM 350 further receives an indication 345 of a predetermined number, such as ten, accounts and associated probabilities from the NM 340.

In some embodiments, the RM 350 comprises a first comparator 351 and a second comparator 352 as shown in Figure 7. The first comparator 351 is arranged to receive the indications 325, 335 from the GM 320 and UM 330. The second comparator 352 is arranged to receive the indications 335, 345 from the UM 330 and the NM 340.

The RM 350 is arranged to compare 351 the indication 325 from the GM 320 and the indication 335 from the UM 330. If the probability associated with one of the accounts from the UM 330 is greater than that from the GM 320, then the RM 350 is arranged to provide an output 355 indicate of the account indicated by the UM 330. In this way, given a sufficiently high probability, the account or category associated with the particular user is selected. However, if the probability associated with one of the accounts from the GM 320 is greater than that from the UM 330, then the second comparator 352 is utilised to perform a further comparison between the one or more accounts and associated probabilities from the GM 320 and the one or more accounts and associated probabilities from the NM 340. Effectively, this is performed in the absence of a sufficiently high probability of an account or category associated with the particular user to then provide a determination of an account associated with one of all users from the GM 320, or a neighbour of the particular user from the NM 340. The second comparator 352 is arranged to select the account from the comparison having the greatest associated probability.

In some embodiments, the RM 350 is arranged to perform a language comparison between names of accounts, or categories, in order to determine whether one or more of the GM 320, UM, 330 and NM 340 are indicative of the same account or category despite variations in language. For example, in a situation where the GM 320 provides an indication 325 of text ABCD and the UM 330 provides an indication 335 of ABCD & E, the two indications may actually relate to the same account or category but textually denoted with a relatively small dissimilarity i.e. "& E" where ABCD is common text or language. Thus, a similarity measure may be determined between the names of accounts or categories by the RM 350. The similarity measure may be determined by an appropriate algorithm for comparing two strings, such as a Levenshtein Distance (LD), Cosine similarity or word similarity matrix. For example, the Cosine similarity determines similarity as a Cosine of an angle resulting in a value between 0 and 1 indicative of the similarity. Cosine similarity may advantageously consider a semantic of input strings, rather than just characters within the strings. In this way, the RM 350 may determine if the indications from two or more of the GM 320, UM 330 and NM 340 have more than a predetermined degree of similarity and are indicative of the same account or category.

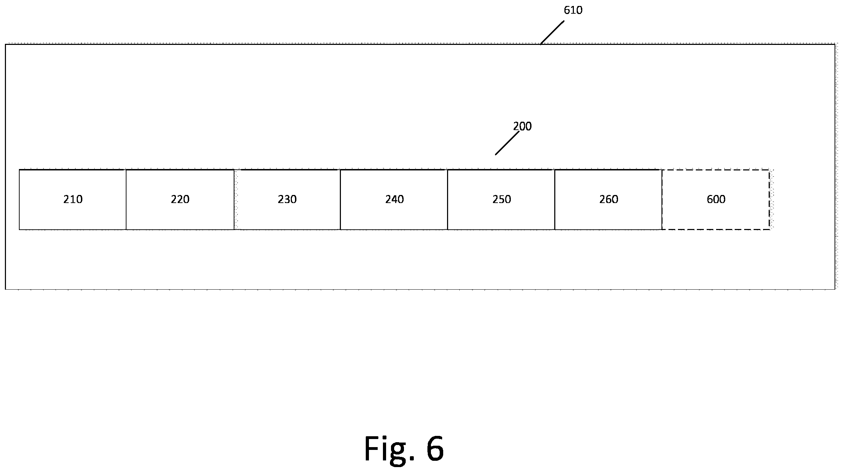

In step 570 the determined account is associated with the TDO 200. In some embodiments, data providing an indication 355 of the determined account is stored with the TDO 200. For example, referring to Figure 6 which shows the TDO 200 of Figure 2, a further attribute field 600 is added to the TDO 200 storing the data indicating the account with which the TDO 200 is determined to be associated. The TDO 200 is stored in a memory 610 of the server computer 120 with the further attribute field 600. The data indicating the account with which the TDO 200 is associated may be referred to as a tag i.e. that the TDO 200 is tagged with an indication of the association. The data 600 allows for easier searching and other operations to be performed on TDOs stored in the memory 610 of the server computer 120. Thus, a processor of a computer may search the memory 610 or other data store to retrieve or otherwise access TDOs meeting one or more search criteria in a more reliable i.e. accurate, and faster manner thereby providing a technical improvement to the storage and subsequent retrieval of data.

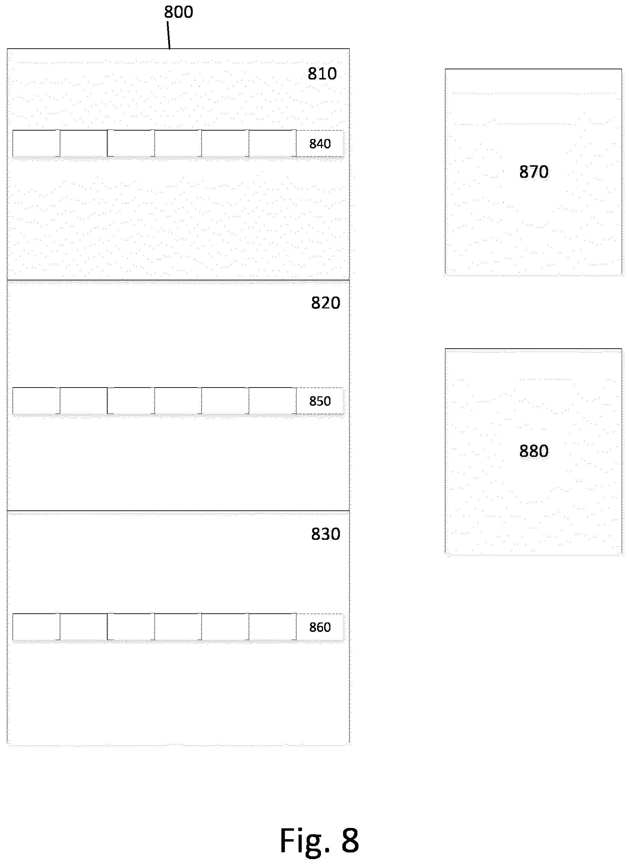

Figure 8 illustrates schematically components of a system according to an embodiment of the invention. Shown in Figure 8 is a memory 800 which may be a persistent storage device such as formed by one or more hard disk drives or solid-state drives (SSDs). The memory is divided into a plurality of regions 810, 820, 830 wherein each region 810, 820, 830 is associated with a respective category. For example, a first region 810 of the memory 800 is associated with a first category, a second region 820 of the memory 800 is associated with a second category and a third region 830 of the memory 800 is associated with a third category it can be appreciated that the number of categories and memory regions is not limited to three. The system further comprises a retrieval module 870 arranged to retrieve from the memory 800 one or more data objects 200 according to an indication 610 of the respective category associated therewith.

As described above in relation to Figure 6, an attribute field 600 is associated with the TDO 200 which is indicative of the determined category. As illustrated in Figure 8, an indication 840 of a first category is associated by the RM 350 with a TDO and the TDO is stored in the first region 810 of the memory 800. Similarly, an indication 850 of a second category is associated by the RM 350 with another TDO and the TDO is stored in the second region 820 of the memory 800 and an indication 860 of a third category is associated by the RM 350 with a further TDO and the TDO is stored in the third region 830 of the memory 800. In this way, the plurality of TDOs are respectively logically distributed in the memory 800 according to the respective category associated with each TDO.

The retrieval module 870 retrieves from the memory 800 TDOs according to the respective indication 810, 820, 830 indications of the category associated with each TDO. The retrieval may be assisted by the distribution of the TDOs within memory amongst the plurality of regions 810, 820, 830. Therefore, the retrieval of the TDOs is made technically more efficient by the indications of the category associated with each TDO and, in some embodiments, the location of the TDOs in the memory 800.

The system further comprises a communication module 880 which is arranged to send the retrieved one or more data objects to the user computer 110, such via the computer network 130. In this way, with more accurate association of data objects or TDOs with respective categories by embodiments of the invention, an amount of data communicated to the user computer 110 via the computer network 130 may be reduced or at least the used data used more efficiently. Furthermore, resources at the user computer are not utilised or wasted storing incorrectly categorised data objects. An indication of one or more received data objects may be displayed at the user computer such as on a display device thereof. Since an area of the display device of the user computer may be limited, the available display area is used more efficiently displaying the indication of the received data objects, thus representing a technical improvement arising through the determining of the association by embodiments of the invention.

It will be appreciated that the memory 800 in which data objects are stored may be part of a physically distinct computer system than the one or more computers implementing the system 300 illustrated in Figure 3. Furthermore, the retrieval module 870 and communication module 880 may be implemented by a different computer system than the system 300 i.e. embodiments of the invention may be implemented by a plurality of distributed computers.

An example according to the present invention provides a computer-implemented system for determining an association of a received data object, comprising a receiver module for receiving a data object associated with a user from a client device, wherein the data object comprises a plurality of attribute fields, a general model for determining a probability value indicative of the data object being associated with each of a plurality of categories in dependence on at least some of the attribute fields, wherein the general model comprises a classifier trained in dependence on an association of data objects with categories for a first plurality of users, a user model associated with the user for determining a probability value indicative of the data object being associated with each of a plurality of user categories associated with the user in dependence on at least some of the attribute fields, wherein the user model comprises a classifier trained in dependence on data objects associated with the user and respective categories, a neighbour module arranged to obtain from a plurality of user models a probability value indicative of the data object being associated with at least one category, wherein each of the plurality of user models is associated with a respective neighbour having a determined similarity to the user and each user model is arranged to determine the probability value in dependence on at least some of the attribute fields, and a reconciliation module arranged to receive at least some of the probabilities determined by the general model, the user model and the neighbour module and to select one of the categories as being associated with the data object in dependence thereon.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A system (120) for determining an association of a received data object (200) with one of a plurality of user-defined categories, comprising:
a computer-implemented communication module (310, 880) for receiving a data object (200) associated with the user, wherein the data object (200) comprises a plurality of attribute fields;
a computer-implemented general model (320) for determining a probability value indicative of the data object (200) being associated with each of the plurality of categories in dependence on at least some of the attribute fields (210, 220, 230, 240, 250, 260), wherein the general model (320) comprises a neural network trained in dependence on an association of data objects with categories for a first plurality of users;
a computer-implemented user model (330) associated with the user for determining a probability value indicative of the data object (200) being associated with each of a plurality of user categories associated with the user in dependence on at least some of the attribute fields (210, 220, 230, 240, 250, 260), wherein the user model (330) comprises an adaptive linear classifier trained in dependence on data objects associated with the user and respective categories;
a computer-implemented neighbour module (340) arranged to obtain from each of a plurality of user models a probability value indicative of the data object (200) being associated with at least one category, wherein each of the plurality of user models is associated with a respective neighbour having a determined similarity to the user and each user model (330) is arranged to determine the probability value in dependence on at least some of the attribute fields (210, 220, 230, 240, 250, 260); and
a computer-implemented reconciliation module (350) arranged to receive at least some of the probabilities determined by the general model (320), the user model (330) and the neighbour module, to select one of the user-defined categories as being associated with the data object (200) in dependence thereon and to store in a memory (610) the data object (200) comprising an indication (610) of the determined category; and
a computer implemented retrieval module (870) arranged to retrieve from the memory (610) one or more data objects (200) according to the indication (610) of the category associated therewith;
wherein the communication module (310, 880) is arranged to send the retrieved one or more data objects to a user computer (110).

2. The system (120) of claim 1, wherein the receiver module (310) is arranged to determine a vector corresponding to at least some of the attribute fields (210, 220, 230, 240, 250, 260) of the data object (200); optionally the vector is determined based on a predetermined algorithm.

3. The system (120) of any preceding claim, wherein the neural network of the general model (320) comprises a perceptron having a plurality of layers arranged in a diamond configuration according to a number of neurons in each layer.

4. The system (120) of any preceding claim, wherein the general model (320) is arranged to output the probability value indicative of the data object (200) being associated with each of a predetermined number of categories; optionally the predetermined number is between 1 and 10.

5. The system (120) of any preceding claim, wherein an output of the general model (320) is provided to the user model (330) for determining the probability value indicative of the data object (200) being associated with each of a plurality of user categories associated with the user in dependence thereon.

6. The system (120) of any preceding claim, wherein the user model (330) is arranged to output a probability value indicative of the data object (200) being associated with each category associated with the user.

7. The system (120) of any preceding claim, wherein the plurality of user models from which the neighbour module is arranged to obtain probability values each comprise an adaptive linear classifier trained in dependence on data objects associated with the respective neighbour.

8. The system (120) of any preceding claim, wherein the neighbour module is arranged to obtain from each of the plurality of user models one probability value indicative of the data object (200) being associated with a category of the respective neighbour.

9. The system (120) of any preceding claim, wherein the reconciliation module (350) is arranged to compare the one or more probabilities determined by the general model (320) and the user model (330), and to select one of the categories determined by the user model (330) as being associated with the data object (200) when said category is associated with a greater probability than a category determined by the general model (320).

10. The system (120) of any preceding claim, wherein the reconciliation module (350) is arranged to perform a textual similarity comparison between the one of the categories determined by the general model (320), the user model (330) and the neighbour module and to reconcile two or more categories having greater than a predetermined degree of textual similarity.

11. The system (120) of any preceding claim wherein the adaptive linear classifier is a passive-aggressive classifier.

12. A computer-implemented method of determining an association of a received data object (200), comprising:
receiving a data object (200) associated with a user, wherein the data object comprises a plurality of attribute fields (210, 220, 230, 240, 250, 260);
determining a probability value indicative of the data object (200) being associated with each of a plurality of categories in dependence on at least some of the attribute fields (210, 220, 230, 240, 250, 260), wherein said determining is performed by a general model (320) comprising a neural network trained in dependence on an association of data objects with categories for a first plurality of users;
determining a probability value indicative of the data object (200) being associated with each of a plurality of user categories associated with the user in dependence on at least some of the attribute fields (210, 220, 230, 240, 250, 260), wherein said determining is performed by a user model (330) comprising an adaptive linear classifier trained in dependence on data objects associated with the user and respective categories;
determining, by a plurality of user models each associated with a respective neighbour, a probability value indicative of the data object (200) being associated with at least one category, wherein each of the plurality neighbours is selected to have a determined similarity to the user and each user model (330) is arranged to determine the probability value in dependence on at least some of the attribute fields (210, 220, 230, 240, 250, 260); and
selecting one of the categories as being associated with the data object (200) in dependence on at least some of the probabilities determined by the general model (320), the user model (330) and the neighbour module;
storing the data object (200) associated with an indication (610) of the determined category; and
retrieving from the memory (610) one or more data objects (200) according to the indication (610) of the category associated therewith.

13. A computer comprising the system of any of claims 1 to 11 or arranged to perform the method of any of claim 12.

14. A system comprising:
a first computer according to claim 13; and
a data processing system in communication with the first computer, the data processing system comprising a computer program product comprising instructions to receive the data object (200) and the indication of the category and process the data object (200) and the indication of the category.

15. A computer system, comprising:
a first computer according to claim 13; and
a second computer communicably coupled to the first computer, wherein the second computer is arranged to, in use, execute computer readable instructions to implement an application to provide data to the categorisation application to form the data object (200) and to receive the indication of the category associated with the data object (200) from the first computer.
